# EUROPÄISCHE PATENTSCHRIFT

(11) **EP 2 989 051 B1**
(45) Veröffentlichungstag und Bekanntmachung des Hinweises auf die Patenterteilung: **19.07.2017**
(21) Anmeldenummer: 14709592.1
(22) Anmeldetag: 04.03.2014
(51) Int. Cl.: C01B 33/03, C01B 33/107, B01J 19/08

(54) **VERFAHREN UND VORRICHTUNG ZUR HERSTELLUNG VON OCTACHLORTRISILAN**
PROCESS AND APPARATUS FOR PREPARATION OF OCTACHLOROTRISILANE
PROCÉDÉ ET DISPOSITIF DE PRODUCTION D'OCTACHLOROTRISILANE

(30) Priorität: 24.04.2013 DE 102013207447
(43) Veröffentlichungstag der Anmeldung: 02.03.2016
(73) Patentinhaber: Evonik Degussa GmbH, 45128 Essen (DE)
(72) Erfinder: LANG, Jürgen Erwin, 76229 Karlsruhe (DE); RAULEDER, Hartwig, 79618 Rheinfelden (DE); MÜH, Ekkehard, 79618 Rheinfelden (DE); MOUSSALLEM, Imad, 63457 Hanau (DE)
(86) Internationale Anmeldenummer: PCT/EP2014/054127
(87) Internationale Veröffentlichungsnummer: WO 2014/173574

(56) Entgegenhaltungen:
- EP-A2- 0 282 037
- WO-A1-2006/013129
- WO-A2-2012/157871
- DE-A1-102005 041 137
- DE-A1-102007 007 874
- DE-A1-102010 043 646
- DE-A1-102013 207 447
- JP-A- S60 247 917
- JP-A- 2010 018 508
- W. MOLNAR ET AL: "A General Approach toward Shape-Controlled Synthesis of Silicon Nanowires", NANO LETTERS, Bd. 13, Nr. 1, 9. Januar 2013 (2013-01-09) , Seiten 21-25, XP055110798, ISSN: 1530-6984, DOI: 10.1021/nl303152b
- YU S EZHOV ET AL: "Molecular structure of octachlorotrisilane Si3Cl8", JOURNAL OF STRUCTURAL CHEMISTRY, KLUWER ACADEMIC PUBLISHERS-PLENUM PUBLISHERS, NE, Bd. 49, Nr. 4, 14. September 2008 (2008-09-14), Seiten 606-612, XP019609563, ISSN: 1573-8779
- Autorenkollektiv: "Plasmatechnik: Grundlagen und Anwendungen - Eine Einführung", 1984, Carl Hanser Verlag, München/Wien ISBN: 3-446-13627-4

## Beschreibung

Die Erfindung betrifft ein Verfahren zur Herstellung von hoch- und höchstreinem Octachlortrisilan aus Chlorsilanen, indem monomeres Chlorsilan einem thermischen Plasma ausgesetzt wird.

Aus dem Stand der Technik sind Verfahren zur Herstellung von Polychlorsilanen bekannt. So offenbart die DE 10 2006 034 061 eine Reaktion von Siliziumtetrachlorid mit Wasserstoff zur Herstellung von Polysilanen. Aufgrund der Umsetzung in Gegenwart von Wasserstoff sind die hergestellten Polysilane wasserstoffhaltig. Um die Anlage im kontinuierlichen Betrieb halten zu können, wird Tetrachlorsilan im Überschuss in Bezug zum Wasserstoff zugesetzt. Zudem hat die offenbarte Anlage einen komplexen Aufbau und erlaubt lediglich die Herstellung von Polysilangemischen. Ein erhöhtes Molekulargewicht der Polysilane kann nur durch Hintereinanderschalten mehrerer Reaktoren und Hochfrequenzerzeuger erreicht werden. Nach dem jeweiligen Durchlaufen der hintereinandergeschalteten Plasmareaktoren erhöht sich das Molekulargewicht der Polysilane nach jedem Plasmareaktor. Das offenbarte Verfahren beschränkt sich auf die Herstellung von unzersetzt in Gasphase überführbare Verbindungen.

EP 1 264 798 A1 offenbart ein Verfahren zur Aufarbeitung von Nebenprodukten enthaltend Hexachlordisilan bei der Herstellung von polykristallinem Silizium.

Auch die US 4,542,002 und WO 2009/143823 A2 offenbaren plasmachemische Verfahren zur Herstellung von Polychlorsilanen ausgehend von Siliziumtetrachlorid und Wasserstoff. Herstellungsbedingt werden Wasserstoff enthaltende Polychlorsilane erhalten. Gemäß der WO 2009/143823 A2 werden Mischungen von Wasserstoff enthaltenden hochmolekularen Polychlorsilane erhalten. Das in den Polychlorsilanen enthaltene Siliziumtetrachlorid muss vor einer Weiterverwendung aufwendig destillativ im Vakuum entfernt werden. Besonders nachteilig im Stand der Technik ist die Notwendigkeit der Herstellung der Polychlorsilane in Gegenwart von gasförmigem Wasserstoff. Hierdurch werden sehr hohe Sicherheitsmaßnahmen an die Materialien und die Sicherung der Anlage gestellt.

Die japanische Patentanmeldung JP 60247917 A offenbart eine Vorrichtung zur Erzeugung eines dünnen amorphen Siliziumfilms auf einem Silizium-Einkristall-Substrat. In die Vorrichtung wird SiCl₄ eingespeist, und bei erhöhter Temperatur kommt es in einer Glühentladung zu einer Umsetzungsreaktion, in deren Verlauf unter anderen Silanen Octachlortrisilan entsteht.

Die Offenlegungsschrift DE 102010043646 A1 schlägt ein Verfahren zur Herstellung von Trichlorsilan vor. Dabei werden SiCl₄ und Silizium in einem Siliziumcarbidrohr bei Temperaturen zwischen 800 °C und 1450 °C umgesetzt, wobei Octachlortrisilan entstehen kann.

Aufgabe der vorliegenden Erfindung ist es, ein wirtschaftliches Verfahren zur Herstellung von Octachlortrisilan bereitzustellen, insbesondere von hoch- bis höchstreinem Octachlortrisilan, welches vorzugsweise vor einer Weiterverarbeitung, wie der Abscheidung von Siliziumschichten in Halbleiterqualität, nicht mehr aufgereinigt werden muss. Ferner soll das Verfahren sich durch eine hohe Ausbeute und eine besonders hohe Reinheit des Verfahrensprodukts auszeichnen. Eine weitere Aufgabe bestand darin, auf die Verwendung von Wasserstoff verzichteten zu können. Ebenso sollte das Octachlortrisilan bei seiner direkten Herstellung nicht in die Gasphase überführt werden müssen, um die Bildung von Zersetzungsprodukten zu vermindern. Eine weitere Forderung bestand darin, Octachlortrisilan unmittelbar bei seiner Herstellung im Wesentlichen frei von monomeren Chlorsilanen herzustellen. Des Weiteren wird eine kostengünstige, einfach konstruierte und leicht zu bedienende Anlage zur Herstellung des Octachlorotrisilan offenbart. Ein besonderer Fokus lag auf der Minimierung der inneren Oberflächen, die zur Kontamination der Chlorsilane beitragen können. Zusätzlich sollte die Anlage vertikal wenig Platz benötigen.

Die gestellten Aufgaben werden durch ein Verfahren nach Anspruch 1 gelöst.

Überraschend wurde gefunden, dass in guter Ausbeute monomere Chlorsilane, gegebenenfalls im Gemisch mit Hexachlordisilan, im thermischen Plasma, also einem im thermischen Gleichgewicht befindlichen Plasma, zu Octachlortrisilan, erfindungsgemäß zu hoch- bis höchstreinem Octachlortrisilan umgesetzt werden kann. Dabei kann das unmittelbare Verfahrensprodukt Octachlortrisilan zu größer gleich 85 Gew.-% enthalten, das im Gemisch mit Polychlorsilanen mit mindestens zwei Siliziumatomen ad 100 Gew.-% vorliegt. Als Polychlorsilane kommen insbesondere Hexachlordisilan, Decachlortetrasilan, Dodecachlorpentasilan und/oder deren Strukturisomeren. Besonders überraschend war, dass eine Herstellung von Octachlortrisilan aus monomeren Chlorsilanen wie vorzugsweise Tetrachlorsilan, oder Gemischen umfassend Tetrachlorsilan (STC) und Trichlorsilan (TCS) oder Gemischen von TCS, STC und/oder Dichlorsilan im Wesentlichen ohne Gegenwart von Wasserstoffgas im thermischen Plasma gelingt. Der besondere wirtschaftliche Vorteil des erfindungsgemäßen Verfahrens wird insbesondere durch die Vorrichtung, mit einem Gasentladungsreaktor, der zwischen zwei Kolonnen angeordnet ist, erzielt. Generell kann nach dem Verfahren auch Octachlortrisilan minderer Qualität in einer Anlage mit einem Gasentladungsreaktor und einer stromabwärts angeordneten Kolonne hergestellt werden.

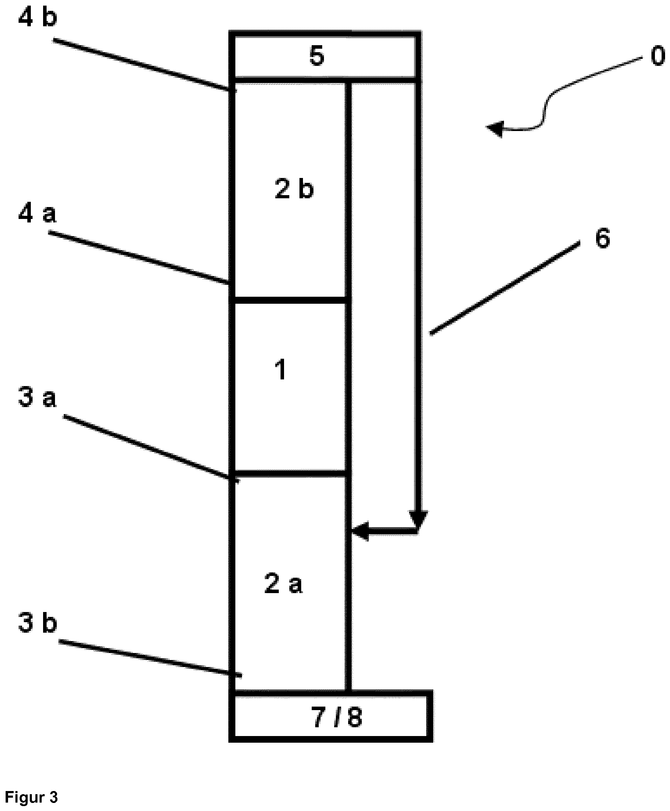

Die Vorrichtung umfasst einen Plasmareaktor, d. h. einen Gasentladungsreaktor, mit zwei zugeordneten Reaktivdestillationskolonnen. Einer der Kolonnen hinter dem Gasentladungsreaktor ist ein Gasteiler mit einer Rückführung zur erneuten Durchleitung nichtumgesetzter, monomerer Chlorsilane der allgemeinen Formel I durch den Gasentladungsreaktor zugeordnet, wie es in **Figur 3** dargestellt ist. Das erfindungsgemäß hergestellte Octachlortrisilan ist vorzugsweise im Rahmen der fachüblichen Nachweisgrenze frei von Wasserstoffatomen und/oder Wasserstoffatome enthaltenden monomeren Chlorsilanen und/oder Polychlorsilanen.

Als frei von Wasserstoff gilt das Octachlortrisilan, wenn sein Gehalt an Wasserstoffatomen unter 1x10⁻³ Gew.-% liegt, insbesondere unter 1x10⁻⁴ Gew.-%, weiter bevorzugt unter 1x10⁻⁶ Gew.-% bis hin zur Nachweisgrenze bei aktuell 1x10⁻¹⁰ Gew.-%. Gegenstand der Erfindung ist auch ein Octachlortrisilan mit einem Gehalt an Wasserstoffatomen von unter 1x10⁻³ Gew.-%, bevorzugt unter 1x10⁻⁶ Gew.-% bis hin zur vorgenannten Nachweisgrenze. Die bevorzugte Methode zur Bestimmung des Gehaltes an Wasserstoffatomen ist, die ¹H-NMR-Spektroskopie, CHN-Analyse vorzugsweise in Kombination mit ICP-MS zur Bestimmung des Gesamtverunreinigungsprofils mit den nachfolgend genannten Elementen.

Ein besonders großer Vorteil des erfindungsgemäßen Verfahrens ist die unmittelbare Verwendbarkeit des hergestellten Octachlortrisilans, d.h. ohne weitere Aufreinigung, zur Abscheidung von hochreinen Siliziumschichten mit Solarsiliziumqualität oder auch Halbleiterqualität.

Gegenstand der Erfindung ist somit ein Verfahren zur Herstellung von Octachlortrisilan, sowie Octachlortrisilan erhältlich nach diesem Verfahren, insbesondere mit einem Gehalt von größer gleich 80 Gew.-% an Octachlortrisilan und einem Titangehalt kleiner gleich 1 Gew.-ppm, vorzugsweise kleiner gleich 100 Gew.-ppb, indem Chlorsilane umfassend mindestens ein monomeres Chlorsilan der allgemeinen Formel 1

HₓSiCl₄₋ₓ (I)

mit x unabhängig voneinander ausgewählt aus 0, 1, 2 oder 3, vorzugsweise ist x gleich 0, 1 oder 2, mit x vorzugsweise gleich 0 oder 1, besonders bevorzugt x gleich 0, oder ein Gemisch umfassend mindestens zwei monomere Chlorsilane der Formel I, insbesondere ausgewählt aus Tetrachlorsilan, Trichlorsilan und Dichlorsilan, bevorzugt reines Tetrachlorsilan oder reines Tetrachlorsilan mit einem Gehalt an Trichlorsilan von kleiner gleich 20 Gew.-% in der Gesamtmischung, insbesondere kleiner gleich 10 Gew.-%, bevorzugt kleiner gleich 7,5 Gew.-%, sowie gegebenenfalls monomere Chlorsilane im Gemisch mit einem Gehalt an Hexachlordisilan, einem thermischen Plasma ausgesetzt und zu Octachlortrisilan umgesetzt werden, wobei das thermische Plasma ein Lichtbogenplasma ist, in welchem die Elektronen und die Ionen annähernd die gleiche Temperatur besitzen, welches dadurch gekennzeichnet ist, dass das Verfahren in einer Vorrichtung (0) umfassend einen Gasentladungsreaktor (1) mit zwei Kolonnen (2a, 2b) durchgeführt wird, und
- eine erste Kolonne (2a) mit einem Kolonneneingang (3a) zur Abtrennung des Octachlortrisilans stromaufwärts vor dem Gasentladungsreaktor (1)
   und eine zweite Kolonne (2b) mit einem Kolonneneingang (4a) zur Abtrennung der Leichtsieder stromabwärts hinter dem Gasentladungsreaktor (1)
   vorgesehen ist, und
- dem Kolonnenausgang (4b) der Kolonne (2b) ein Gasteiler (5) zugeordnet ist, und
- dem Gasteiler (5) eine Rückführung (6) zugeordnet ist, die die Leichtsieder der ersten Kolonne (2a) oder dem Gasentladungsreaktor (1) als Rücklauf zuführt, und im Gasentladungsreaktor ein Druck von 300 bis 800 mbar_{abs} herrscht.

Der Vorteil des Verfahrens ist, dass kein Wasserstoffträgergas und auch kein zusätzlicher Katalysator eingesetzt werden muss. Somit können im Verfahren monomere Chlorsilane der allgemeinen Formel I oder Mischungen monomerer Chlorsilane der Formel I mit oder ohne Hexachlordisilan im thermischen Plasma zu Octachlortrisilan umgesetzt werden, wobei keine zusätzlichen Wasserstoff enthaltenden Verbindungen, insbesondere Wasserstoff, zugesetzt werden müssen.

Die Herstellung des vorzugsweise hoch- bis höchstreinen Octachlortrisilans erfolgt mittels Umsetzung monomerer Chlorsilane der allgemeinen Formel I in einem thermischen Plasma. Vorzugsweise wird ein Rücklaufverhältnis an monomeren Chlorsilanen der allgemeinen Formel I und Hexachlordisilan, die als Leichtsieder gelten, an einem Gasteiler eingestellt. Die rückgeführten Leichtsieder werden anschließend vorzugsweise an einem Kondensator kondensiert und in die erste Kolonne oder in den Gasentladungsreaktor zurückgeführt. Der verbleibende Teil der Leichtsieder kann ebenfalls kondensiert und zurückgeführt oder ausgeschleust werden. Vorzugsweise wird erhaltenes Monochlorsilan, HCl und/oder Monosilan nicht kondensiert und nach dem Kondensator aus dem System ausgeschleust.

Die genannte Trennung ist leicht mithilfe einer entsprechenden Temperierung des Kondensators möglich. In einer alternativen Verfahrensführung wird bei Tetrachlorsilan als Edukt ggf. mit einem gewissen Gehalt an Trichlorsilan und/oder Dichlorsilan, das gebildete Hexachlordisilan am Kondensator nach dem Gasteiler kondensiert und ausgeschleust, während die weiteren Chlorsilane gasförmig erneut dem Gasentladungsreaktor zugeführt werden.

Die möglichen Reaktionen im thermischen Plasma können idealisiert wie folgt dargestellt werden: 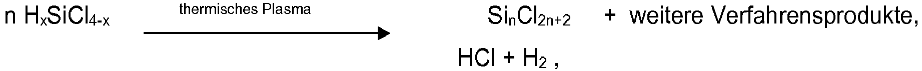 wie mit x = 0, 1, 2 oder 3, vorzugsweise für x gleich 1 und 0, unabhängig vorzugsweise n = 3 und n = 2 als Zwischenprodukt.

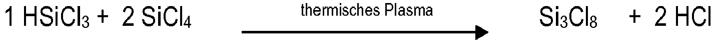

Durch die Verfahrensführung, insbesondere in der erfindungsgemäßen Vorrichtung der Figuren 3 bis 6, kann gezielt Octachlortrisilan hergestellt und isoliert werden, ohne dass es zuvor in die Gasphase überführt werden muss, um es von monomeren Edukten oder Nebenprodukten abzutrennen.

Bevorzugt werden als Chlorsilane der allgemeinen Formel I Tetrachlorsilan, Trichlorsilan, Dichlorsilan oder Mischungen dieser eingesetzt. Ein besonderer Vorteil des Verfahrens ist die Möglichkeit der Herstellung von Octachlortrisilan in Halbleiterqualität, ausgehend von höchstreinem Tetrachlorsilan (STC_{eg}), vorzugsweise im Gemisch mit einem Gehalt an höchstreinem Trichlorsilan (TCS_{eg}).

Alternativ kann es aus STC in Gegenwart von höchstreinem Dichlorsilan (DCS_{eg}) sowie einer Mischungen der vorgenannten Chlorsilane erhalten werden. Eine bevorzugte entsprechend höchstreine Mischung umfasst Tetrachlorsilan mit einem Gehalt an Trichlorsilan und/oder Dichlorsilan. "Höchstreines Chlorsilan" ist im Rahmen der Erfindung die Bezeichnung für "electronic grade Chlorsilan", abgekürzt "eg".

Zur Herstellung des erfindungsgemäßen Octachlortrisilans wird ein hoch- bis höchstreines monomeres Chlorsilan der allgemeinen Formel I oder eine Mischung der monomeren Chlorsilane der Formel I eingesetzt, wie höchstreines Tetrachlorsilan, höchstreines Trichlorsilan und/oder höchstreines Dichlorsilan, vorzugsweise mit einem Gehalt monomerer Chlorsilane von 90 bis 99,9999999 Gew.-% mit ad 100 Gew.-% ggf. Hexachlordisilan, Octachlortrisilan und ggf. Polychlorsilane mit mindestens zwei Siliziumatomen, wobei die Gesamtverunreinigung mit nachstehend genannten Elementen von kleiner gleich 100 Gew.-ppm bis 0,001 Gew.-ppt ein hochreines Chlorsilan definiert. Eine Gesamtverunreinigung mit den nachstehenden Elementen kleiner gleich 50 Gew.-ppm bis 0,001 Gew.-ppt definiert ein höchstreines Chlorsilan, bevorzugt sind kleiner gleich 40 Gew.-ppm bis 0,001 Gew.-ppt an Gesamtverunreinigung. Vorzugsweise beträgt der Gehalt an monomeren Chlorsilanen 98 Gew.-% bis 99,9999999 Gew.-% mit kleiner gleich 100 Gew.-ppm bis 0,001 Gew.-ppt Gesamtverunreinigungen in einem hochreinen Chlorsilan, vorzugsweise kleiner gleich 50 Gew.-ppm bis 0,001 Gew.-ppt in einem höchstreinen Chlorsilan, und ggf. ad 100 Gew.-% Hexachlordisilan und/oder Octachlortrisilan, wobei das Verunreinigungsprofil der monomeren Chlorsilane der allgemeinen Formel I wie folgt ist:
a. Aluminium von 15 Gew.-ppm bis 0,0001 Gew.-ppt, und/oder
b. Bor kleiner gleich 5 bis 0,0001 Gew.-ppt, bevorzugt im Bereich von 3 Gew.-ppm bis 0,0001 Gew.-ppt, und/oder
c. Calcium kleiner gleich 2 Gew.-ppm, bevorzugt von 2 Gew.-ppm bis 0,0001 Gew.-ppt, und/oder
d. Eisen von 5 Gew.-ppm bis 0,0001 Gew.-ppt, vorzugsweise von 0,6 Gew.-ppm bis 0,0001 Gew.-ppt, und/oder
e. Nickel von 5 Gew.-ppm bis 0,0001 Gew.-ppt, vorzugsweise von 0,5 Gew.-ppm bis 0,0001 Gew.-ppt, und/oder
f. Phosphor von 5 Gew.-ppm bis 0,0001 Gew.-ppt, vorzugsweise von 3 Gew.-ppm bis 0,0001 Gew.-ppt, und/oder
g. Titan kleiner gleich 10 Gew.-ppm,
   kleiner gleich 2 Gew.-ppm,
   bevorzugt von 1 Gew.-ppm bis 0,0001 Gew.-ppt,
   weiter bevorzugt von 0,6 Gew.-ppm bis 0,0001 Gew.-ppt,
   weiter bevorzugt von 0,1 Gew.-ppm bis 0,0001 Gew.-ppt, und/oder
h. Zink kleiner gleich 3 Gew.-ppm,
   bevorzugt von 1 Gew.-ppm bis 0,0001 Gew.-ppt,
   weiter bevorzugt von 0,3 Gew.-ppm bis 0,0001 Gew.-ppt, und/oder
i. Kohlenstoff,
wobei die Konzentration von Kohlenstoff in einer im Rahmen des dem Fachmann
bekannten Meßverfahrens üblichen Nachweisgrenze angestrebt wird.
Die Bestimmung der Gesamtverunreinigung mit den vorgenannten Elementen erfolgt vorzugsweise mittels ICP-MS. Insgesamt kann der Prozess kontinuierlich mittels online-Analytik überwacht werden. Die geforderte Reinheit kann mittels GC, IR, NMR, ICP-MS oder durch Widerstandsmessung bzw. GD-MS nach Abscheidung des Si überprüft werden.
Ein besonderer Vorteil des Verfahrens gemäß der Erfindung ist, dass die Herstellung des Octachlortrisilans selektiv über das eingestellte Rücklaufverhältnis, den molaren Gehalt an Hexachlordisilan sowie das molare Verhältnis der monomeren Chlorsilane der allgemeinen Formel I im Gasentladungsreaktor gesteuert werden kann.

Ebenso ist es von Vorteil, dass auf den Zusatz von teuren, inerten Edelgasen verzichtet werden kann. Alternativ kann ein Schleppgas, vorzugsweise ein unter Druck stehendes Inertgas, wie Stickstoff, Argon, ein anderes Edelgas oder Mischungen dieser zugesetzt werden.

Ein weiterer Vorteil des Verfahrens ist die selektive Herstellung von höchstreinem Octachlortrisilan, das ggf. einen geringen Gehalt an höchstreinem Hexachlordisilan, höchstreinem Decachlortetrasilanen und/oder Dodecachlorpentasilan aufweist und hervorragend den Anforderungen der Halbleiterindustrie entspricht.

So wird nach einer besonders bevorzugten Verfahrensvariante höchstreines Octachlortrisilan mit einem Gehalt an Octachlortrisilan von größer 95,9999 Gew.-% bis 99,999999 Gew.-% isoliert, wobei der verbleibende Gehalt bis 99,999999 Gew.-% jeweils Hexachlordisilan, Decachlortetrasilan und/oder Dodecachlorpentasilan umfasst. Octachlortrisilan kann erfindungsgemäß durch die erste Kolonne in den Vorlagebehälter ablaufen und dort kontinuierlich oder satzweise isoliert werden.

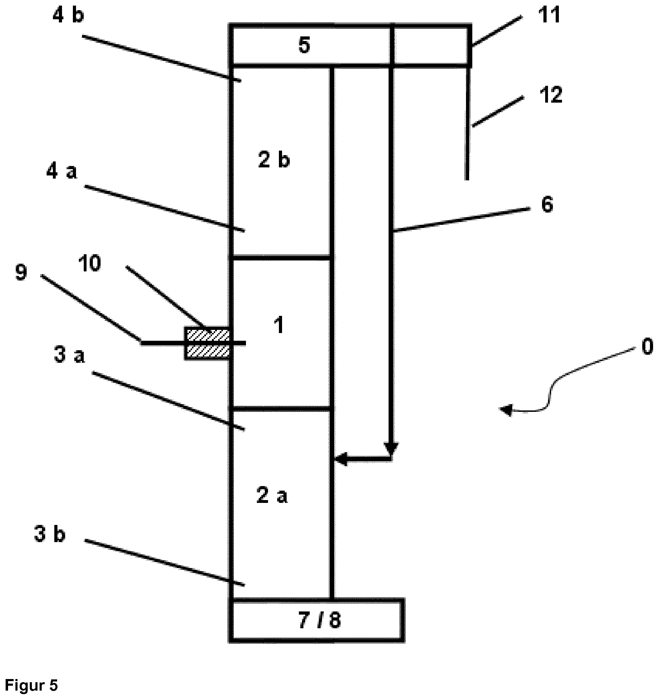

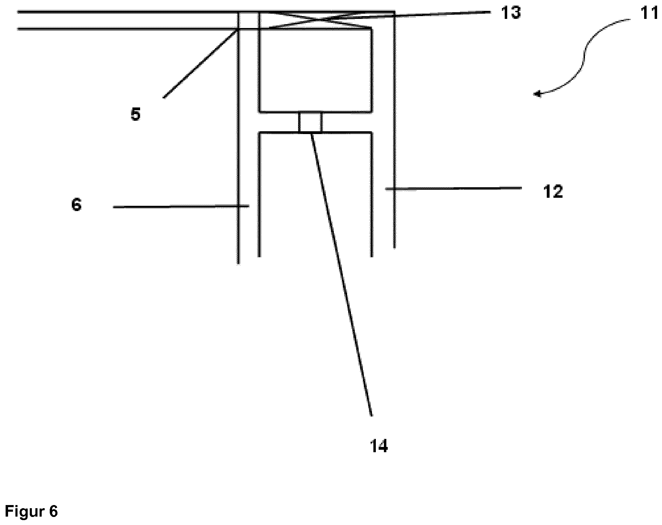

Gemäß einer Alternative kann zusätzlich als Leichtsieder, vorzugsweise nach dem Gasteiler und nach Kondensation höchstreines Hexachlordisilan mit einem Gehalt an Hexachlordisilan von größer 95,9999 Gew.-% bis 99,999999 Gew.% isoliert werden, wobei der verbleibende Gehalt bis 99,999999 Gew.-% jeweils monomere Chlorsilane der allgemeinen Formel 1 umfasst. Vorzugsweise kann Hexachlordisilan entsprechend der Figuren 5 und 6 nach dem Kondensator 11 isoliert werden.

Gemäß einer besonders bevorzugten Verfahrensvariante wird als unmittelbares Verfahrensprodukt ein höchstreines Octachlortrisilan mit einen Titangehalt von unter 10 Gew.-ppm isoliert, bevorzugt von unter 8 Gew.-ppm, besonders bevorzugt unter 5 Gew.-ppm, weiter bevorzugt kleiner 1 Gew.-ppm (gemessen mittels ICP-MS).

Als hochreines Octachlortrisilan gilt ein Octachlortrisilan mit einem Gehalt an Octachlortrisilan zwischen 80 bis 99,999999 Gew.-% mit ad 100 Gew.-% Polychlorsilane, wie Hexachlordisilan, Decachlortetrasilan, Dodecachlorpentasilan und/oder deren Strukturisomere, wobei die Gesamtverunreinigung mit nachstehenden Elementen kleiner gleich als 100 Gew.-ppm beträgt, in höchstreinem Octachlortrisilan liegt die Gesamtverunreinigung bei kleiner gleich 50 Gew.-ppm. Vorzugweise beträgt der Gehalt an Octachlortrisilan im hochreinen oder höchstreinen Octachlortrisilan zwischen 85 bis 99,999999 Gew.-%, bevorzugt zwischen 90 bis 99,999999 Gew.-%, besonders bevorzugt zwischen 99,99 bis 99,9999999 Gew.-%, weiter bevorzugt zwischen 99,9999 bis 99,9999999 Gew.-% wobei die Gesamtverunreinigung kleiner gleich 100 Gew.-ppm in hochreinem und kleiner gleich 50 Gew.-pp in höchstreinem Octachlortrisilan beträgt, insbesondere mit Verunreinigungen eines, mehrerer oder aller Elemente ausgewählt aus Bor, Phosphor, Kohlenstoff und Fremdmetallen sowie Wasserstoff, vorzugsweise ausgewählt aus Bor, Phosphor, Kohlenstoff, Aluminium, Calcium, Eisen, Nickel, Titan und Zink und/oder Wasserstoff.
Dabei weist das vorgenannte Octachlortrisilan das folgende Verunreinigungsprofil eines, mehrerer oder aller folgenden Elemente auf und gilt als höchstreines Octachlortrisilan:
a. Aluminium kleiner gleich 5 Gew.-ppm oder
   von 5 Gew.-ppm bis 0,0001 Gew.-ppt,
   vorzugsweise von 3 Gew.-ppm bis 0,0001 Gew.-ppt, und/oder
b. Bor von 10 Gew.-ppm bis 0,0001 Gew.-ppt,
   vorzugsweise im Bereich von 5 bis 0,0001 Gew.-ppt,
   weiter bevorzugt im Bereich von 3 Gew.-ppm bis 0,0001 Gew.-ppt, und/oder
c. Calcium kleiner gleich 2 Gew.-ppm,
   bevorzugt von 2 Gew.-ppm bis 0,0001 Gew.-ppt, und/oder
d. Eisen kleiner gleich 20 Gew.-ppm,
   bevorzugt von 10 Gew.-ppm bis 0,0001 Gew.-ppt,
   weiter bevorzugt von 0,6 Gew.-ppm bis 0,0001 Gew.-ppt, und/oder
e. Nickel kleiner gleich 10 Gew.-ppm,
   bevorzugt von 5 Gew.-ppm bis 0,0001 Gew.-ppt,
   weiter bevorzugt von 0,5 Gew.-ppm bis 0,0001 Gew.-ppt, und/oder
f. Phosphor kleiner 10 Gew.-ppm bis 0,0001 Gew.-ppt,
   bevorzugt von 5 Gew.-ppm bis 0,0001 Gew.-ppt,
   weiter bevorzugt von 3 Gew.-ppm bis 0,0001 Gew.-ppt, und/oder
g. Titan kleiner gleich 10 Gew.-ppm,
   kleiner gleich 2 Gew.-ppm,
   bevorzugt von 1 Gew.-ppm bis 0,0001 Gew.-ppt,
   weiter bevorzugt von 0,6 Gew.-ppm bis 0,0001 Gew.-ppt,
   weiter bevorzugt von 0,1 Gew.-ppm bis 0,0001 Gew.-ppt, und/oder
h. Zink kleiner gleich 3 Gew.-ppm,
   bevorzugt von 1 Gew.-ppm bis 0,0001 Gew.-ppt,
   weiter bevorzugt von 0,3 Gew.-ppm bis 0,0001 Gew.-ppt,
i. Kohlenstoff, und
j. Wasserstoff,
wobei der Gehalt Wasserstoff und Kohlenstoff jeweils in einer Konzentration im Bereich
der Nachweisgrenze der dem Fachmann bekannten Meßverfahren angestrebt wird. Wie ausgeführt, beträgt die Gesamtverunreinigung des Octachlortrisilans mit den vorgenannten Elementen bzw. Verunreinigungen von 100 Gew.-ppm bis 0,001 Gew.-ppt in hochreinem Octachlortrisilan, bevorzugt von 50 Gew.-ppm bis 0,001 Gew.-ppt in höchstreinem Octachlortrisilan, weiter bevorzugt von 10 Gew.-ppm bis 0,001 Gew.-ppt, besonders bevorzugt von 5 Gew.-ppm bis 0,001 Gew.-ppt in der Summe. Das erfindungsgemäß erhältliche Octachlortrisilan weist eine Konzentration von Wasserstoff im Bereich der Nachweisgrenze der dem Fachmann bekannten Meßverfahren auf.

Besonders bevorzugt wird Octachlortrisilan erhalten, insbesondere umfassend Hexachlordisilan, Decachlortetrasilan und/oder Dodecachlorpentasilan, wobei das Octachlortrisilan einen Gehalt an Octachlortrisilan von 60 bis 99,999999 Gew.-% aufweisen kann, vorzugsweise im Gemisch mit anderen Polychlorsilanen mit 2, 4 und/oder 5 Siliziumatomen.
Bevorzugt ist ein Gehalt an Octachlortrisilan von 91 bis 99,999999 Gew.-%, weiterhin vorzugsweise mit einem Gehalt von 99,99 bis 99,9999999 Gew.-%.

Gemäß einer weiter bevorzugten Verfahrensvariante wird das erfindungsgemäße Verfahren zur Herstellung von Octachlortrisilan eingesetzt, indem monomeres Chlorsilan der allgemeinen Formel 1, insbesondere Tetrachlorsilan im Gemisch mit Trichlorsilan oder eine Mischung monomerer Chlorsilane der Formel I in Gegenwart von Hexachlordisilan in einer Vorrichtung umfassend einen Gasentladungsreaktor mit zwei Kolonnen einem thermischen Plasma ausgesetzt werden.

Weiter ist es bevorzugt, wenn monomeres Chlorsilan der Formel 1 einer Kolonne zur Abtrennung des Octachlortrisilans, die stromaufwärts vor dem Gasentladungsreaktor angeordnet ist, zugeführt wird oder direkt in den Gasentladungsreaktor eingebracht wird. Das abgetrennte Octachlortrisilan gilt als Schwersieder. Das Verhältnis der Bildung von Octachlortrisilan und Hexachlordisilan kann in dem erfindungsgemäßen Verfahren über das molare Verhältnis der monomeren Chlorsilane der Formel I, die Kontaktzeiten im Gasentladungsreaktor sowie über die Durchflussgeschwindigkeit, gemessen in sccm/s, gesteuert werden.

Das erfindungsgemäße Verfahren wird in einer Vorrichtung durchgeführt, die eine erste Kolonne mit einem Kolonneneingang zur Abtrennung des Octachlortrisilans stromaufwärts vor dem Gasentladungsreaktor, insbesondere unterhalb des Gasentladungsreaktors aufweist, und eine zweite Kolonne mit einem Kolonneneingang zur Abtrennung der Leichtsieder, insbesondere der monomeren Chlorsilane und von Hexachlordisilan stromabwärts hinter, insbesondere oberhalb des Gasentladungsreaktors aufweist. Dem Kolonnenausgang der zweiten Kolonne ist ein Gasteiler und vorzugsweise nach dem Gasteiler mindestens ein Kondensator zur Kondensation der rückgeführten und/oder abgetrennten Leichtsieder zugeordnet. Die Vorrichtung kann auch als Plasma-Reaktivdestillationsvorrichtung ausgestaltet sein, wobei der Plasmareaktor zwischen zwei Reaktivdestillationskolonnen angeordnet ist.

In dem Verfahren wird das Chlorsilan der Formel I oder Chlorsilan der Formel I im Gemisch mit Hexachlordisilan, in den Gasentladungsreaktor eingebracht oder der ersten Kolonne, insbesondere im oberen Drittel, zugeführt.

Gleichfalls Gegenstand der Erfindung ist ein Verfahren zur Herstellung von Octachlortrisilan in einer Vorrichtung wie in den **Figuren 3** bis **6** dargestellt, umfassend eine erste Kolonne 2a mit einem Kolonneneingang 3a zur Abtrennung des Octachlortrisilans stromaufwärts vor dem Gasentladungsreaktor 1, insbesondere unterhalb des Gasentladungsreaktors 1, und mit einer zweiten Kolonne 2b mit einem Kolonneneingang 4a zur Abtrennung der Leichtsieder, insbesondere von monomeren und/oder dimeren Chlorsilanen, insbesondere der gebildeten monomeren Chlorsilane, nicht umgesetzter Edukte und dimerer Chlorsilanverbindungen, wie Hexachlordisilan, stromabwärts hinter dem Gasentladungsreaktor 1 vorgesehen ist, insbesondere oberhalb des Gasentladungsreaktors 1 entsprechend der Figuren 3 bis 5, und, wobei dem Kolonnenausgang 4b der Kolonne 2b ein Gasteiler 5 zugeordnet ist, insbesondere weist der Gasteiler 5 ein Absperr- oder Regelorgan auf, ferner ist dem Gasteiler 5 eine Rückführung 6 zugeordnet, die die Leichtsieder als Rücklauf der ersten Kolonne 2a oder dem Gasentladungsreaktor 1 zuführt. Gemäß einer besonders bevorzugten Ausführungsform weist der Gasteiler 5 ein Absperr- oder Regelorgan auf, bevorzugt ein Ventil, besonders bevorzugt ein elektromagnetisches Ventil. Das elektromagnetische Ventil, kann als Tellerventil ausgestaltet sein.

Die Funktion des Gasteilers 5 besteht darin, die gasförmigen Verfahrensprodukte sowie nicht umgesetzte gasförmige Edukte in zwei Gasströme aufzuteilen und zwar in einen ersten Gasstrom, der über die Rückführung 6 als Rücklauf erneut dem Gasentladungsreaktor 1 oder der ersten Kolonne 2a, insbesondere in der oberen Hälfte, vorzugsweise im oberen Drittel, zugeführt wird. Der zweite Gasstrom kann beispielsweise in der Anordnung 11 gemäß der **Figuren 5** und **6** kondensiert und über die Leitung 12 abgetrennt werden oder definiert der Rückführung 6 über das Absperr- und Regelorgan 14 zugeführt werden. Alternativ können die kondensierten Verbindungen des zweiten Gasstroms auch direkt dem Gasentladungsreaktor zugeführt werden. Die getrennten Gasströme können unabhängig voneinander nach dem Gasteiler an getrennten Kondensatoren zumindest teilweise kondensiert werden. Das gebildete Octachlortrisilan läuft in der ersten Kolonne 2a in den Vorratsbehälter oder in den Sumpfabzug ab.

Zur Ermittlung bevorzugter Rücklaufverhältnisse kann eine online Prozessanalysentechnik, zum Beispiel ein IR-Analysegerät und/oder ein Prozess-Gaschromatograph, vor dem Gasteiler die molare Zusammensetzung der Gaszusammensetzung ermitteln, aus denen anschließend das gewünschte Rücklaufverhältnis unter Berücksichtigung der Eduktströme berechnet werden kann. Damit kann die molare Zusammensetzung der Edukte, insbesondere im kontinuierlichen Prozess, gezielt gesteuert werden, um im Gasentladungsreaktor ein definiertes molares Verhältnis zwischen den Chlorsilanen der allgemeinen Formel I und ggf. Hexachlordisilan einstellen zu können.
Besonders bevorzugt wird das Rücklaufverhältnis auf einen Wert eingestellt, der es erlaubt, das im thermischen Plasma gebildete Hexachlordisilan innerhalb fachüblicher Meßungenauigkeiten vollständig zurückzuführen und vorzugsweise zugleich im Rücklauf ein molares Verhältnis von Trichlorsilan zu Tetrachlorsilan von etwa 1 zu 20 einzustellen. Gemäß einer besonders bevorzugten Verfahrensvariante wird in dem zweiten Gasstrom das Hexachlordisilan kondensiert, insbesondere in der Anordnung 11 mit Kondensator 13 und Regelorgan 14, wie in Figur 6 dargestellt, und auf diese Weise von den gasförmigen monomeren Chlorsilanen separiert. Das Hexachlordisilan kann anschließend kontrolliert über das Regelorgan 14 der Rückführung 6 zugeführt werden. Alternativ kann das Hexachlordisilan über eine dem Gasentladungsgreaktor oder der ersten Kolonne zugeordnete weitere Rückführung zudosiert werden. Ebenfalls besteht die Möglichkeit, das aus dem zweiten Gasstrom auskondensierte Hexachlordisilan direkt den Eduktströmen zu zugegeben. Das im thermischen Plasma gebildete Octachlortrisilan kann aus dem Gasentladungsreaktor durch die erste Kolonne in den Sumpfabzug oder Vorlagebehälter ablaufen. Die Temperatur des Sumpfverdampfers wird so eingestellt, dass das erwünschte Octachlortrisilan nicht in die Gasphase überführt wird. Als Sumpfverdampfer können bevorzugt Umlaufverdampfer zur schonenden Erwärmung der Polysilane eingesetzt werden. Alternativ kann auch kontinuierlich Sumpfprodukt abgelassen werden, um die thermische Belastung zu minimieren.

Gegenstand der Erfindung ist somit ein Verfahren, in dem die (i) den Gasentladungsreaktor über die zweite Kolonne (2b) verlassenden Chlorsilane der Formel I im Gemisch mit oder ohne Hexachlordisilan, in der Vorrichtung (0) am Gasteiler (5) aufgeteilt werden, und (ii) ein Teil des Gasstroms, auch erster Gasstrom genannt, über die Rückführung (6) als Rücklauf in die erste Kolonne (2a) zurückgeführt wird, (iii) dieser Teil des Chlorsilans der allgemeinen Formel I im Gemisch mit Hexachlordisilan und gegebenenfalls Hexachlordisilan aus dem zweiten Gasstrom, kann alternativ als Rücklauf gelten und wird erneut durch den Gasentladungsreaktor (1) geführt, und (iv) wird Octachlortrisilan, insbesondere hochreines Octachlortrisilan, besonders bevorzugt höchstreines Octachlortrisilan, am Kolonnenausgang (3b) der ersten Kolonne (2a) gewonnen.

Vorzugsweise können die Chlorsilane der Formel I im Gemisch mit Hexachlordisilan nach dem Gasteiler zumindest teilweise vor der Rückführung kondensiert werden. Als Rücklauf gilt der insgesamt zurückgeführte Stoffstrom, der den ersten Gasstrom aber den zumindest teilweise zurückgeführten zweiten Gasstrom, insbesondere das kondensierte Hexachlordisilan umfasst. Dabei ist es besonders bevorzugt, wenn das molare Verhältnis von Trichlorsilan zu Tetrachlorsilan im ersten Gasstrom, weiter bevorzugt im Rücklauf, von 0,1 : 20 bis 2 : 20 beträgt, insbesondere wird das molare Verhältnis von Trichlorsilan zu Tetrachlorsilan etwa auf 1:20 eingestellt. Die Toleranz liegt bei etwa +/- 0,5, bevorzugt +/- 0,25.

Das gewonnene Octachlortrisilan kann bei Bedarf weiter gereinigt werden, z. B. destilliert oder mittels Chromatographie gereinigt werden. Eine weitere Aufreinigung ist jedoch in der Regel für erfindungsgemäß hergestelltes Octachlortrisilan nicht notwendig. Bei Bedarf kann das gewonnene Octachlortrisilan einer Vakuumdestillation, insbesondere einer Vakuumfeindestillation, zugeführt werden, insbesondere, um den Gehalt des Octachlortrisilans zu erhöhen, indem die höhermolekularen Polychlorsilane abgetrennt werden, sofern Gemische an Polychlorsilanen erhalten wurden. Alternativ oder zusätzlich kann sich auch eine chromatographische Aufarbeitung anschließen, um Verunreinigungen abzutrennen oder auch um den Gehalt an Octachlortrisilan einzustellen.

Zusätzlich oder alternativ zu einem der vorgenannten Merkmale wird bevorzugt Octachlortrisilan mit einem Gehalt an Polychlorsilanen erhalten, das mindestens 1 Mol-% an verzweigten Polychlorsilanen in der Gesamtzusammensetzung aufweist, wie tert-Decachlortetrasilan, iso-Decachlortetrasilan und/oder verzweigte Dodecachlorpentasilanen, bevorzugt liegt der Anteil bei größer gleich 1,5 Mol.-%.

Weiter ist ein Verfahren bevorzugt, in dem Chlorsilan der allgemeinen Formel I oder eine Mischung von Chlorsilanen der Formel 1 sowie gegebenenfalls Chlorsilan im Gemisch mit Hexachlordisilan, in den Gasentladungsreaktor eingebracht wird oder der ersten Kolonne zugeführt wird, vorzugsweise wird das Chlorsilan oder eine Mischung gasförmig in den Gasentladungsreaktor oder der ersten Kolonne zugeführt. Dabei ist es ferner bevorzugt, wenn das Chlorsilan bei erstmaliger Zuführung verdampft wird, bei einer Rückführung als Leichtsieder wird das Chlorsilan in der ersten Kolonne verdampft, während gebildetes Octachlortrisilan nicht verdampft wird und in den Vorlagebehälter am Sumpf ablaufen kann und gesammelt wird.

Die monomeren und dimeren Chlorsilane, wie Hexachlordisilan, gelten als Leichtsieder, wobei Octachlortrisilan und Polychlorsilane mit mindestens drei Siliziumatomen als Schwersieder gelten. Im erfindungsgemäßen Verfahren werden gebildeter Wasserstoff, Chlor, Monosilan, Monochlorsilan und/oder Chlorwasserstoff als Prozessgase aus dem Prozess ausgeschleust und können anschließend aufgetrennt, außerhalb dieser Vorrichtung kondensiert oder einem anderen Prozess zugeleitet werden.

Die den Gasentladungsreaktor, insbesondere das Plasmatron, über die zweite Kolonne verlassenden Chlorsilane der Formel 1, insbesondere Tetrachlorsilan, Trichlorsilan und/oder Dichlorsilan, entsprechen im Verfahren nicht umgesetzten Chlorsilanen, die zur Umsetzung dem Gasentladungsreaktor als Rücklauf erneut zugeführt werden. Der besondere Vorteil des Verfahrens und seine Wirtschaftlichkeit ergeben sich aus der Rück- oder Kreisführung der nicht im Gasentladungsreaktor umgesetzten Chlorsilane.

Durch die erfindungsgemäße Rückführung nichtumgesetzter Chlorsilanedukte und der gleichzeitigen Ausschleusung des Octachlortrisilans über die erste Kolonne als Sumpfprodukte, kann mit der erfindungsgemäßen, einfach konstruierten Vorrichtung bzw. Anlage ein besonders wirtschaftliches Verfahren mit extrem verkleinerten inneren Oberflächen der Anlagenteile bereitgestellt werden. Bekannte Verfahren und Anlagen tragen erheblich zur Kontamination der Produkte oder den Kosten der Anlagenteile bei. Sowohl die Kosten als auch die Kontamination konnten mit dem erfindungsgemäßen Verfahren und der erfindungsgemäßen Vorrichtung deutlich verringert werden. Somit erlaubt die erfindungsgemäße Konstruktion der Anlage in Kombination mit dem erfindungsgemäßen Verfahren eine besonders wirtschaftliche Verfahrensführung mit deutlich verringerten Kontaminierungseinflüssen.

Gemäß einer alternativen Verfahrensführung können die Leichtsieder dem Verdampfer der Eduktzuführung oder dem Verdampfer im Gasentladungsreaktor zugeführt werden, so dass die Chlorsilane und Hexachlordisilan verdampft werden und das unverdampfte Octachlortrisilan in der ersten Kolonne ablaufen kann.

Zusätzlich oder alternativ zu einem der vorgenannten Verfahrensmerkmale ist es bevorzugt, wenn molare Mischungen monomerer Chlorsilane der allgemeinen Formel I in dem Verfahren eingesetzt werden bzw. molare Verhältnisse im thermischen Plasma eingestellt werden. Bevorzugte molare Verhältnisse von Tetrachlorsilan und Trichlorsilan liegen vorzugsweise von 1 : 30 bis 10 : 1, insbesondere von 1 : 25 bis 5 : 1, weiter bevorzugt von 1 : 20 bis 1 : 10. Alternativ kann zur Herstellung von Octachlortrisilan vorzugsweise ein Gemisch von Chlorsilanen der allgemeinen Formel I eingesetzt werden, umfassend Tetrachlorsilan und Dichlorsilan, insbesondere im molaren Verhältnis von 1 : 10 bis 10 : 1, insbesondere von 1 : 5 bis 5 : 1, bevorzugt von 1 : 2 bis 2 : 1. Auf diese Weise kann nach dem erfindungsgemäßen Verfahren, und insbesondere unter Verwendung der Vorrichtung, ein hochreines Octachlortrisilan, insbesondere ein höchstreines Octachlortrisilan, mit jeweils kleiner gleich 1 Gew.-ppm Titan erhalten werden.

Verfahrensgemäß wird als thermisches Plasma ein elektrisch erzeugtes Gleichgewichtsplasma bevorzugt. Als thermische Plasmen gelten Plasmen, die bei erhöhtem Druck betrieben werden und zu einem Gleichgewicht führen. Im thermischen Plasma besitzen die Elektronen T_{E} und die Ionen T_{I} annähernd die gleiche Temperatur, da die freie Weglänge der Teilchen gering und die Stossfrequenz hoch ist, so dass sich eine einheitliche Gastemperatur T_{G} einstellt, mit T_{E} annähernd gleich T_{I} annähernd gleich T_{G}. Ein thermisches Plasma weist somit hohe Energiedichten sowie hohe Prozesstemperaturen auf. Das Plasma ist ein Lichtbogenplasma und weist, je nach angelegter Spannung, einen Stromfluss zwischen wenigen Milliampere bis zu einigen Kiloampere auf. Bevorzugt wird das Verfahren im Bereich der selbständigen Entladung betrieben, wobei im Bereich der Glimmentladung (70 bis 1000 V, 1 bis 1000 mA), besonders bevorzugt im Bereich der Bogenentladung (10 bis 50 V, grösser 1 A) gearbeitet wird. Die Erzeugung des Lichtbogenplasmas bzw. des thermischen Plasmas erfolgt mithilfe eines Plasmatrons. Generell sind direkte, indirekte sowie Gleichstrom- oder Wechselstromplasmatrone zur Durchführung des erfindungsgemäßen Verfahrens geeignet. Um ein bevorzugtes, homogenes thermisches Plasma zu erzeugen wird ein indirektes Gleichstromplasmatron genutzt.

Das monomere Chlorsilan der allgemeinen Formel I umströmt und durchströmt beim indirekten Plasmatron den Lichtbogen zwischen Kathode und Anode innerhalb des Plasmatrons und dissoziiert und ionisiert gegebenenfalls. Um einen stabilen Lichtbogen zu generieren wird vorzugswiese mit einem Gleichstromplasmatron gearbeitet.

Zur Durchführung des erfindungsgemäßen Verfahrens herrscht im Gasentladungsreaktor ein Druck von 300 bis 800 mbar_{abs.}.

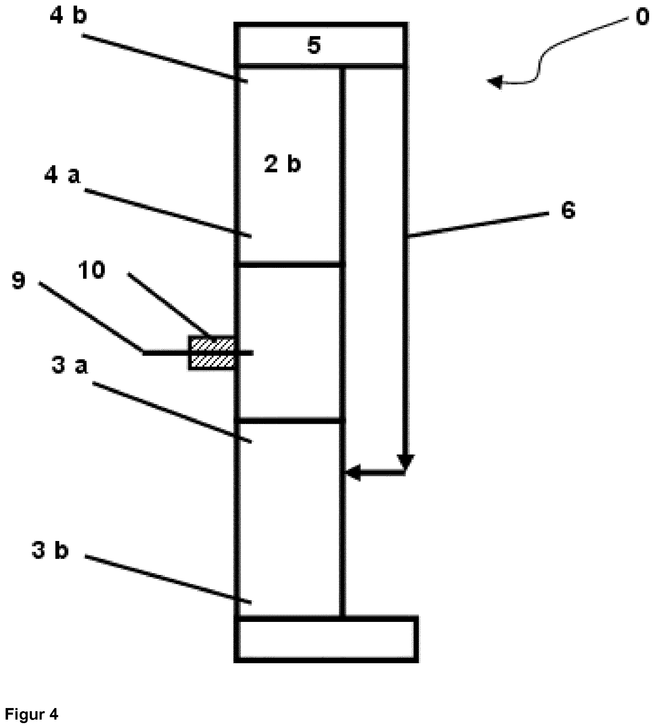

Die Vorrichtung 0 zur Durchführung des erfindungsgemäßen Verfahrens weist einen Gasentladungsreaktor 1 auf, dem zwei Kolonnen 2a, 2b zugeordnet sind, und der Gasentladungsreaktor ist vorzugsweise ein Plasmatron (Gleich- oder Wechselstrom), besonders bevorzugt ein indirekter Plasmatron. Die Vorrichtung weist zusätzlich zum Gasentladungsreaktor eine erste Kolonne 2a mit einem Kolonneneingang 3a zur Abtrennung des Octachlortrisilans stromaufwärts vor dem Gasentladungsreaktor 1 auf und eine zweite Kolonne 2b mit einem Kolonneneingang 4a zur Abtrennung der Leichtsieder und im Kreis zuführendes Hexachlordisilan stromabwärts hinter dem Gasentladungsreaktor 1 auf. Zudem ist dem Kolonnenausgang 4b der Kolonne 2b ein Gasteiler 5 zur Einstellung definierter Gasströme der Leichtsieder zugeordnet.
Zur Zuführung der Chlorsilane in den Gasentladungsreaktor ist dem Reaktor eine Eduktzuführung 9, **Figur 4** bzw. **5,** zugeordnet, die in einer Alternative einen Verdampfer 10, **Figur 4** bzw. **5,** zur Verdampfung und/oder Temperierung der Edukte aufweist. Alternativ kann der Verdampfer sich auch im Gasentladungsreaktor 1 befinden.
In einer besonders bevorzugten Ausführungsform ist der Gasteiler 5 ein Absperr- oder Regelorgan, insbesondere ein Ventil, besonders bevorzugt ist der Gasteiler 5 ein elektromagnetisches Ventil, und einer Rückführung 6 zugeordnet, die die Leichtsieder der ersten Kolonne 2a zuführt oder dem Gasentladungsreaktor 1, einem Verdampfer im Gasentladungsreaktor oder einem der Eduktzuführung zugeordneten Verdampfer. Dem unteren Kolonnenausgang 3b der ersten Kolonne 2a ist ein Vorlagebehälter 7 am Sumpfabzug oder Sumpfverdampfer 8 zugeordnet. Erfindungsgemäß werden als erste und/oder als zweite Kolonne sogenannten Packungskolonnen oder Reaktivkolonnen eingesetzt, die Raschigringe oder Glockenböden aufweisen können. Das hergestellte Octachlortrisilan wird in einem dem Kolonnenausgang 3b der ersten Kolonne zugeordneten Vorlagebehälter 7 oder einem dem Kolonnenausgang 3b zugeordneten Sumpfverdampfer 8 hochrein oder höchstrein isoliert. Dem Gasteiler 5 ist eine Anordnung 11 zugeordnet, die einen Kondensator 13 zur Kondensation zumindest eines Teils des zweiten Gasstroms, insbesondere von Hexachlordisilan aufweist. Gleichfalls ist die Rückführung 6 dem Gasteiler 5 und der Anordnung 11 zugeordnet. Insgesamt können die Leichtsieder der zweiten Kolonne am Gasteiler 5, in einen ersten Gasstrom, der in die Rückführung 6 geleitet wird, und in einen zweiten Gasstrom, der in die Anordnung 11 am Kondensator 13 vorbeigeführt werden kann, aufgeteilt werden. Der zweite Gasstrom kann anschließend aus der Anordnung 11 über das Regelorgan 14 der Rückführung 6 zugeleitet werden oder über die Leitung 12 ausgeschleust werden.

Ebenfalls offenbart ist ein Octachlortrisilan erhältlich nach dem erfindungsgemäßen Verfahren, das einen Gehalt an Octachlortrisilan von 90,0 bis 99,999999 Gew.-% aufweist mit ad 100 Gew.-% vorzugsweise Polychlorsilane mit mindestens drei Siliziumatomen, besonders bevorzugt mit ad 100 Gew.-% Hexachlordisilan,
n-Decachlortetrasilan, iso-Decachlortetrasilan, tert-Decachlortetrasilan und/oder Dodecachlorpentasilan sowie deren Strukturisomere, und mit einem Gehalt an Titan von kleiner gleich 1 Gew.-ppm. Das erhaltene Octachlortrisilan kann zusätzlich oder alternativ einen Gehalt an verzweigten Polychlorsilanen mit mindestens vier Siliziumatomen größer gleich 1 Mol.-% in der Gesamtzusammensetzung aufweisen.

Das nach dem Verfahren hergestellte Octachlortrisilan mit einem Gehalt an Titan von kleiner gleich 1 Gew.-ppm eignet sich hervorragend zur Abscheidung von hoch- bis höchstreinem Silizium, vorzugsweise von Silizium enthaltenden Schichten. Durch die Verwendung des erfindungsgemäß hergestellten reinen Octachlortrisilans können sowohl die Belastung mit Chlor während der Abscheidung, als auch die Temperaturen während der Abscheidung deutlich vermindert werden. Ebenso eignet sich das Octachlortrisilan in hohem Maße zur Herstellung von Siliziumnitrid, Siliziumoxynitrid, Siliziumcarbid, Siliziumoxycarbid oder Siliziumoxid, insbesondere zur Herstellung von Schichten dieser Materialien sowie zur Herstellung von epitaktischen Schichten, bevorzugt durch Niedrigtemperaturepitaxie. Diese Schichten lassen sich beispielsweise über Chemical Vapor Deposition (CVD) herstellen. Zudem eignen sich das hergestellte hochreine oder höchstreine Octachlortrisilan als Ausgangssubstanz für die Herstellung von hochreinem Disilan (Si₂H₆) oder Trisilan (Si₃H₈).

Nachfolgend wird die Erfindung anhand der Figuren näher erläutert.
**Figur 1****:** Gemisch enthaltend Octachlortrisilan und Hexachlordisilan hergestellt nach dem erfindungsgemäßen Verfahren, 99,34 MHz- ²⁹Si-NMR in DMSO.
**Figur 2****:** Polychlorsilane umfassend Hexachlordisilan, Octachlortrisilan, tert-Decachlortetrasilan, n-Decachlortetrasilan und Dodecachlorpentasilan hergestellt nach dem erfindungsgemäßen Verfahren, 99,34 MHz- ²⁹Si-NMR in DMSO. A = Si₂Cl₆, B = n-Si₃Cl₈, C = (Cl₃Si)₃SiCl, D = n-Si₄Cl₁₀ und E = n-SiCl₁₂.
**Figur 3****:** Schematische Darstellung der Vorrichtung 0 umfassend einen Gasentladungsreaktor 1 und eine erste Kolonne 2a und eine zweite Kolonne 2b sowie einen Gasteiler 5 und eine Rückführung 6.
**Figur 4****:** Schematische Darstellung der Vorrichtung 0 mit Sumpfverdampfer 8 und Eduktzuführung 9 sowie Verdampfer 10.
**Figur 5****:** Schematische Darstellung der Vorrichtung 0 mit Sumpfverdampfer 8, Eduktzuführung 9, Gasteiler 5 und Anordnung 11 umfassend einen Kondensator 13.
**Figur 6****:** Schematischen Darstellung der Anordnung 11 und Gasteiler 5

### Beispiel 1: Herstellung Gemisch von Octachlortrisilan und Hexachlordisilan

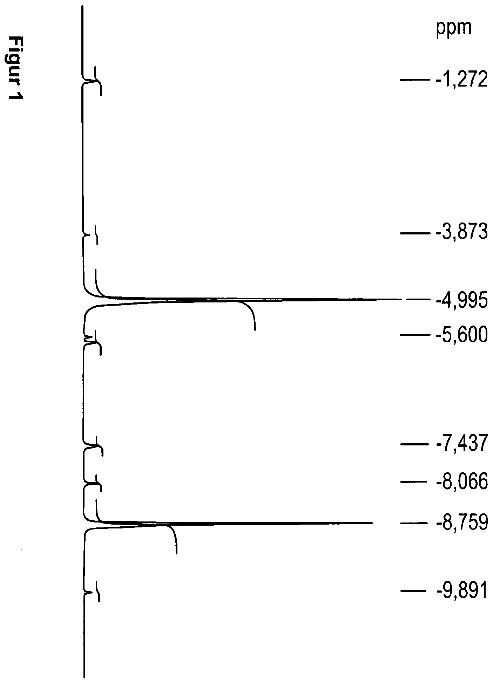

Die im ²⁹Si-NMR gemessenen Konzentrationen der Verunreinigungen im erfindungsgemäß erhaltenen Gemisch sind in **Figur 1** dargestellt.

### Beispiel 2: Herstellung Gemisch von Polychlorsilanen

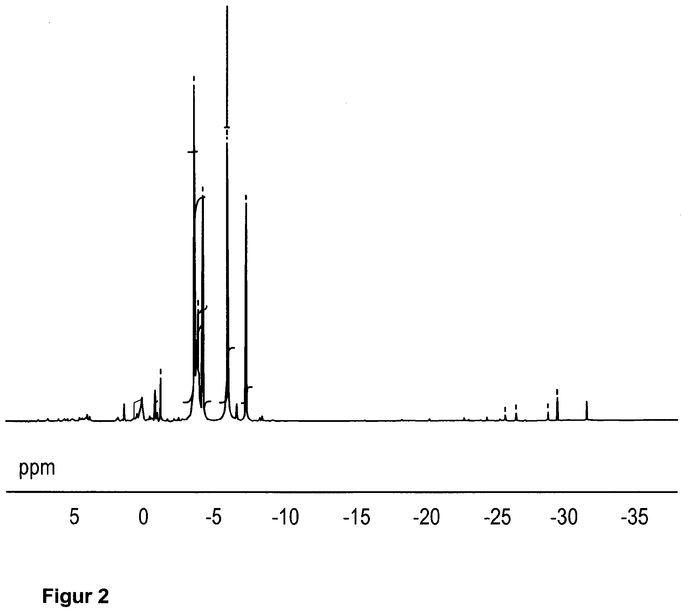

Der Gehalt an Fremdmetallen wurde im ICP-MS gemessen. Die Verunreinigungen des erfindungsgemäß erhaltenen Gemisches sind in **Figur 2** dargestellt.

### Bezugszeichenliste:

- 0: Vorrichtung/Anlage
- 1: Gasentladungsreaktor
- 2a: erste Kolonne
- 2b: zweite Kolonne
- 3a: oberer Kolonnenausgang der ersten Kolonne
- 3b: unterer Kolonnenausgang der ersten Kolonne
- 4a: unterer Kolonnenausgang der zweiten Kolonne
- 4b: oberer Kolonnenausgang der ersten Kolonne
- 5: Kondensator
- 6: Rückführung
- 7: Vorlagebehälter
- 8: Sumpfverdampfer
- 9: Eduktzuführung
- 10: Verdampfer
- 11: Anordnung umfassend Kondensator und Regelorgan (Rücklauf/Abtrennung)
- 12: Leitung
- 13: Kondensator
- 14: Absperr-/Regelorgan

## Patentansprüche

1. Verfahren zur Herstellung von Octachlortrisilan, indem Chlorsilane, umfassend mindestens ein monomeres Chlorsilan der allgemeinen Formel I
HₓSiCl₄₋ₓ (I)
mit x unabhängig voneinander ausgewählt aus 0, 1, 2 oder 3 einem thermischen Plasma ausgesetzt werden, wobei
das thermische Plasma ein Lichtbogenplasma ist, in welchem die Elektronen und die Ionen annähernd die gleiche Temperatur besitzen,
**dadurch gekennzeichnet, dass**
das Verfahren in einer Vorrichtung (0) umfassend einen Gasentladungsreaktor (1) mit zwei Kolonnen (2a, 2b) durchgeführt wird,
und
- eine erste Kolonne (2a) mit einem Kolonneneingang (3a) zur Abtrennung des Octachlortrisilans stromaufwärts
vor dem Gasentladungsreaktor (1)
und eine zweite Kolonne (2b) mit einem Kolonneneingang (4a) zur Abtrennung der Leichtsieder stromabwärts
hinter dem Gasentladungsreaktor (1)
vorgesehen ist, und
- dem Kolonnenausgang (4b) der Kolonne (2b) ein Gasteiler (5) zugeordnet ist, und
- dem Gasteiler (5) eine Rückführung (6) zugeordnet ist, die die Leichtsieder der ersten Kolonne (2a) oder dem Gasentladungsreaktor (1) als Rücklauf zuführt,
und im Gasentladungsreaktor ein Druck von 300 bis 800 mbar_{abs} herrscht.

2. Verfahren nach Anspruch 1,
**dadurch gekennzeichnet,**
**dass** Octachlortrisilan und Hexachlordisilan als Gemisch erhalten werden.

3. Verfahren nach einem der Ansprüche 1 oder 2,
**dadurch gekennzeichnet,**
**dass** höchstreines Octachlortrisilan isoliert wird.

4. Verfahren nach einem der Ansprüche 1 bis 3,
**dadurch gekennzeichnet,**
**dass** Octachlortrisilan mit einem Titangehalt von unter 1 Gew.-ppm erhalten wird.

5. Verfahren nach einem der Ansprüche 1 bis 4,
**dadurch gekennzeichnet,**
**dass** als Edukt höchstreines Tetrachlorsilan, höchstreines Trichlorsilan und/oder höchstreines Dichlorsilan eingesetzt wird.

6. Verfahren nach Anspruch 1,
**dadurch gekennzeichnet,**
**dass** der Gasteiler (5) ein Absperr- oder Regelorgan aufweist, insbesondere ein Ventil, bevorzugt ein elektromagnetisches Ventil.

7. Verfahren nach einem der Ansprüche 1 bis 6,
**dadurch gekennzeichnet,**
**dass** Chlorsilan der Formel I oder Chlorsilan der Formel I im Gemisch mit Hexachlordisilan, in den Gasentladungsreaktor (1) eingebracht werden oder der ersten Kolonne (2a) zugeführt werden.

8. Verfahren nach einem der Ansprüche 1 bis 7,
**dadurch gekennzeichnet,**
**dass** (i) die den Gasentladungsreaktor über die zweite Kolonne (2b) verlassenden Chlorsilane der Formel I im Gemisch mit Hexachlordisilan in der Vorrichtung (0) am Gasteiler (5) aufgeteilt werden und ein Teil des Gemisches als Rücklauf (ii) über die Rückführung (6) in die erste Kolonne (2a) zurückgeführt und, (iii) erneut durch den Gasentladungsreaktor (1) geführt wird, und (iv) hochreines oder höchstreines Octachlortrisilan am Kolonnenausgang (3b) der ersten Kolonne (2a) gewonnen wird.

9. Verfahren nach einem der Ansprüche 1 bis 8,
**dadurch gekennzeichnet,**
**dass** ein molares Verhältnis von Trichlorsilan zu Tetrachlorsilan im Rücklauf von 0,1 : 20 bis 2 : 20 beträgt.

## Claims

1. Process for preparing octachlorotrisilane by subjecting chlorosilanes comprising at least one monomeric chlorosilane of the general formula I
HₓSiCl₄₋ₓ (I)
where x is independently selected from 0, 1, 2 and 3 to a thermal plasma, wherein
the thermal plasma is a light arc plasma in which the electrons and the ions have virtually the same temperature,
**characterized in that**
the process is performed in an apparatus (0) comprising a gas discharge reactor (1) having two columns (2a, 2b),
and
- a first column (2a) is provided with a column inlet (3a) for removal of the octachlorotrisilane upstream of the gas discharge reactor (1) and a second column (2b) with a column inlet (4a) for removal of the low boilers downstream of the gas discharge reactor (1), and
- the column outlet (4b) of column (2b) has a dedicated gas divider (5), and
- the gas divider (5) has a dedicated recycle line (6) which supplies the low boilers to the first column (2a) or to the gas discharge reactor (1) as a return stream,
and a pressure of 300 to 800 mbar_{abs} exists in the gas discharge reactor.

2. Process according to Claim 1,
**characterized in that**
octachlorotrisilane and hexachlorodisilane are obtained as a mixture.

3. Process according to either of Claims 1 and 2,
**characterized in that**
ultrahigh-purity octachlorotrisilane is isolated.

4. Process according to any of Claims 1 to 3,
**characterized in that**
octachlorotrisilane having a titanium content of less than 1 ppm by weight is obtained.

5. Process according to any of Claims 1 to 4,
**characterized in that**
the reactant used is ultrahigh-purity tetrachlorosilane, ultrahigh-purity trichlorosilane and/or ultrahigh-purity dichlorosilane.

6. Process according to Claim 1,
**characterized in that**
the gas divider (5) has a shut-off or regulating unit, especially a valve, preferably an electromagnetic valve.

7. Process according to any of Claims 1 to 6,
**characterized in that**
chlorosilane of the formula I or chlorosilane of the formula I is introduced into the gas discharge reactor (1) or supplied to the first column (2a) in a mixture with hexachlorodisilane.

8. Process according to any of Claims 1 to 7,
**characterized in that**
(i) the chlorosilanes of the formula I in a mixture with hexachlorodisilane leaving the gas discharge reactor via the second column (2b) are divided in the apparatus (0) at the gas divider (5) and a portion of the mixture (ii) is recycled as a return stream via the recycle line (6) into the first column (2a) and (iii) conducted again through the gas discharge reactor (1) and (iv) high-purity or ultrahigh-purity octachlorotrisilane is obtained at the column outlet (3b) of the first column (2a).

9. Process according to any of Claims 1 to 8,
**characterized in that**
a molar ratio of trichlorosilane to tetrachlorosilane in the return stream is from 0.1:20 to 2:20.

## Revendications

1. Procédé de fabrication d'octachlorotrisilane, par exposition de chlorosilanes, comprenant au moins un chlorosilane monomère de formule générale I
HₓSiCl₄₋ₓ (I)
les x étant choisis indépendamment l'un de l'autre parmi 0, 1, 2 ou 3,
à un plasma thermique,
le plasma thermique étant un plasma à arc électrique dans lequel les électrons et les ions présentent approximativement la même température,
**caractérisé en ce que**
le procédé est réalisé dans un dispositif (0) comprenant un réacteur à décharge de gaz (1) muni de deux colonnes (2a, 2b),
et
- une première colonne (2a) munie d'une entrée de colonne (3a) pour la séparation de l'octachlorotrisilane est prévue en amont avant le réacteur à décharge de gaz (1),
et une seconde colonne (2b) munie d'une entrée de colonne (4a) pour la séparation des composants de point d'ébullition faible est prévue en aval après le réacteur à décharge de gaz (1), et
- un diviseur de gaz (5) est raccordé à la sortie (4b) de la colonne (2b), et
- une conduite de recyclage (6) est raccordée au diviseur de gaz (5), qui introduit les composants de point d'ébullition faible dans la première colonne (2a) ou le réacteur à décharge de gaz (1) en tant que reflux, et une pression de 300 à 800 mbar_{abs} règne dans le réacteur à décharge de gaz.

2. Procédé selon la revendication 1, **caractérisé en ce que** l'octachlorotrisilane et l'hexachlorodisilane sont obtenus sous la forme d'un mélange.

3. Procédé selon l'une quelconque des revendications 1 ou 2, **caractérisé en ce que** de l'octachlorotrisilane ultra pur est isolé.

4. Procédé selon l'une quelconque des revendications 1 à 3, **caractérisé en ce que** de l'octachlorotrisilane ayant une teneur en titane inférieure à 1 ppm en poids est obtenu.

5. Procédé selon l'une quelconque des revendications 1 à 4, **caractérisé en ce que** du tétrachlorosilane ultra pur, du trichlorosilane ultra pur et/ou du dichlorosilane ultra pur sont utilisés en tant que réactif.

6. Procédé selon la revendication 1, **caractérisé en ce que** le diviseur de gaz (5) comprend un organe d'arrêt ou de régulation, notamment une soupape, de préférence une soupape électromagnétique.

7. Procédé selon l'une quelconque des revendications 1 à 6, **caractérisé en ce que** du chlorosilane de formule I ou du chlorosilane de formule I en mélange avec de l'hexachlorodisilane sont introduits dans le réacteur à décharge de gaz (1) ou dans la première colonne (2a).

8. Procédé selon l'une quelconque des revendications 1 à 7, **caractérisé en ce que** (i) les chlorosilanes de formule I quittant le réacteur à décharge de gaz par la seconde colonne (2b) en mélange avec l'hexachlorodisilane sont divisés dans le dispositif (0) dans le diviseur de gaz (5) et une partie du mélange est recyclée en tant que reflux (ii) par la conduite de recyclage (6) dans la première colonne (2a) et (iii) réintroduite dans le réacteur à décharge de gaz (1), et (iv) de l'octachlorotrisilane hautement pur ou ultra pur est obtenu à la sortie de colonne (3b) de la première colonne (2a).

9. Procédé selon l'une quelconque des revendications 1 à 8, **caractérisé en ce qu'**un rapport molaire entre le trichlorosilane et le tétrachlorosilane dans le reflux est de 0,1:20 à 2:20.
